(19) Europäisches Patentamt / European Patent Office / Office européen des brevets

(11) **EP 2 816 642 B1**

(12) **EUROPEAN PATENT SPECIFICATION**

(45) Date of publication and mention
of the grant of the patent:
**07.08.2019 Bulletin 2019/32**

(51) Int Cl.:
*H01M 4/587* (2010.01)          *H01M 4/133* (2010.01)
*H01M 4/62* (2006.01)           *H01M 10/0525* (2010.01)

(21) Application number: **13749643.6**

(22) Date of filing: **13.02.2013**

(86) International application number:
**PCT/JP2013/053434**

(87) International publication number:
**WO 2013/122115 (22.08.2013 Gazette 2013/34)**

(54) **NEGATIVE-ELECTRODE ACTIVE MATERIAL FOR NON-AQUEOUS SECONDARY BATTERY, AND NEGATIVE ELECTRODE AND NON-AQUEOUS SECONDARY BATTERY USING SAID ACTIVE MATERIAL**

NEGATIVELEKTRODENAKTIVMATERIAL FÜR WASSERFREIE SEKUNDÄRBATTERIE SOWIE NEGATIVELEKTRODE UND WASSERFREIE SEKUNDÄRBATTERIE MIT DEM BESAGTEN AKTIVMATERIAL

MATÉRIAU ACTIF POUR ANODE DE BATTERIE SECONDAIRE NON AQUEUSE AINSI QU'ANODE ET BATTERIE SECONDAIRE NON AQUEUSE METTANT EN OEUVRE CE MATÉRIAU ACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2012   JP 2012029988**
**30.03.2012   JP 2012080655**
**16.05.2012   JP 2012112317**
**22.06.2012   JP 2012141100**
**27.07.2012   JP 2012167659**
**22.08.2012   JP 2012183037**
**18.12.2012   JP 2012275819**
**18.12.2012   JP 2012275820**
**16.01.2013   JP 2013005457**
**29.01.2013   JP 2013014416**

(43) Date of publication of application:
**24.12.2014   Bulletin 2014/52**

(73) Proprietor: **Mitsubishi Chemical Corporation Tokyo 100-8251 (JP)**

(72) Inventors:
• **ARIKAWA, Yuuya**
**Yokohama-shi**
**Kanagawa 227-8502 (JP)**
• **OKAYASU, Teruyuki**
**Yokohama-shi**
**Kanagawa 227-8502 (JP)**
• **FUJITA, Rie**
**Yokohama-shi**
**Kanagawa 227-8502 (JP)**
• **SAKAI, Aoi**
**Yokohama-shi**
**Kanagawa 227-8502 (JP)**
• **FUJIMORI, Naomi**
**Yokohama-shi**
**Kanagawa 227-8502 (JP)**
• **UENO, Nobuhiko**
**Yokohama-shi**
**Kanagawa 227-8502 (JP)**
• **MARU, Naoto**
**Inashiki-gun**
**Ibaraki 300-0332 (JP)**

(74) Representative: **Hoffmann Eitle**
**Patent- und Rechtsanwälte PartmbB**
**Arabellastraße 30**
**81925 München (DE)**

(56) References cited:
EP-A1- 1 906 472          WO-A1-2008/097723
CN-A- 1 412 873           JP-A- 2002 134 171
JP-A- 2005 276 604        JP-A- 2008 066 260

## Description

Technical Field

The present invention relates to a negative electrode active material for nonaqueous secondary batteries, which is useful in production of nonaqueous secondary batteries that have low initial irreversible capacity and little gas generation due to decomposition of nonaqueous electrolytic solution, and have excellent charge/discharge cycle stability. The present invention also relates to a negative electrode for nonaqueous secondary batteries that is formed using the active material, and to a nonaqueous secondary battery provided with the negative electrode.

Background Art

Recently, with the background of development of electric vehicles and others, studies of lithium ion secondary batteries that are nonaqueous secondary batteries have been made actively, as high-energy density batteries. Regarding lithium ion secondary batteries, use of a carbon material such as graphite or the like as the negative electrode active material is known.

Above all, graphite having a large degree of graphitization provides, when used as the negative electrode active material for lithium ion secondary batteries, a capacity of around 372 mAh/g that is the theoretical capacity of lithium absorption of graphite, and is, in addition, excellent in cost-performance and durability, and consequently, it is known that graphite of the type is preferable as a negative electrode active material.

In case where the carbon material as above is used as the negative electrode active material of lithium ion secondary batteries, in general, a protective film called SEI (solid electrolyte interface) is formed through reaction with a polymer compound used as a binder or the like and with a nonaqueous electrolytic solution, on the surface of the carbon material. SEI interferes with contact between the carbon material and the electrolytic solution whereby the decomposition of the electrolytic solution by the active carbon material can be thereby prevented. As a result, it is known that the chemical stability of the surface of the negative electrode can be thereby maintained.

However, lithium ion secondary batteries using a carbon material as the negative electrode active material therein have some problems in that, owing to SEI coating film formation and gas generation as a product in side reaction therein, the charge/discharge irreversible capacity in the initial cycle increases and, as a result, the batteries could not have a high capacity. Further, formation of the stable SEI coating film provides another problem in that the interface resistance (negative electrode resistance) at the negative electrode increases and therefore the input/output characteristics of the batteries worsen.

For solving the above problems, there is known a technique of coating a carbon material of a negative electrode active material with a polymer or the like. For example, PTL 1 discloses a nonaqueous secondary battery in which a coating layer formed of an ion-conducting polymer or a water-soluble polymer is provided on the surface of the carbon material therein. According to PTL 1, the coating layer formed of an ion-conducting polymer such as polyethylene oxide or the like, or a water-soluble polymer such as polyvinyl alcohol or the like (hydrolyzate of styrene-maleic anhydride copolymer) fulfil the function of preventing decomposition of the nonaqueous electrolyte layer, or preventing deposition of the decomposed product of the constitutive component of the nonaqueous electrolyte layer on the surface of the negative electrode. Consequently, the reference says that the coating layer contributes toward improvement of the initial charge/discharge efficiency and improvement of cycle characteristics.

However, the above-mentioned polymer is insufficient in point of the adhesiveness thereof to carbon materials, and the initial discharge efficiency, the cycle characteristics and the stability are therefore still insufficient.

With that, an amino group has become specifically noted as a functional group having good adhesiveness. PTL 2 discloses a carbon material that has, as adhered thereto, an organic polymer having an aliphatic amino group in the side chain thereof.

The reference says that a polyallylamine is the most preferred as the organic polymer, and says, regarding the effect thereof, that the surface modification through adhesion of the organic polymer reduces the irreversible capacity in use of the carbon material as the negative electrode active material for nonaqueous secondary batteries.

PTL 3 discloses an electrode material composed of a carbon material and an organic polymer that covers the carbon material and has at least a tertiary nitrogen atom in the main chain thereof. The reference says that polyethyleneimine is the most preferred as the organic polymer, and says, regarding the effect thereof, that the discharge characteristics can be improved by reducing the specific surface area of the carbon material.

PTL 4 describes a nonaqueous secondary battery, for which one that contains carbon at least partially coated on the surface thereof with a water-soluble polymer substance capable of negatively charging in water (polystyrenesulfonic acid or polystyrenesulfonic acid copolymerized with maleic acid) is used as the negative electrode active material in producing the negative electrode, and one that contains a compound capable of being reduced at a higher potential than that for propylene carbonate is used as the nonaqueous electrolytic solution.

PTL 5 describes an electrode composition for a negative electrode as well as an electrochemical cell and a battery pack prepared by using the electrode composition. The electrode composition comprises a powdered material capable of undergoing lithiation and delithiation, wherein the powdered material is selected from tin, a tin alloy, carbon and a combination thereof; and a nonelastic binder comprising a lithium polyacrylate.

PTL 6 describes a graphite composite particle for a nonaqueous secondary battery. In the graphite composite particle, $D_L/D_S$ is more than 1 and 2 or less, wherein $D_L$ $\mu$m means a volume-based median size measured by a laser diffraction/scattering-type particle size distribution measuring apparatus, and $D_S$ $\mu$m means an average circle-equivalent particle size which is determined from a measured area S of particles each having a contour not overlapped with a contour of another particle in a SEM; and a Raman R value is 0.04 or more and 0.14 or less, wherein the Raman R value means an intensity ratio $I_B/I_A$ between an intensity $I_A$ of a maximum peak of 1580 cm$^{-1}$ around and an intensity $I_B$ of a maximum peak of 1360 cm$^{-1}$ around in a Raman spectrum.

PTL 7 describes an electrode for a lithium secondary battery. The electrode has an active material capable of storing or releasing Li ions, at least one kind of a material having an electric double layer capacitance or a pseudo-electric double layer capacitance, at least one kind of a conductive agent, and at least one kind of a water soluble organic compound, and a material having the electric double layer capacitance or a pseudo-electric double layer capacitance has an acidic surface functional group. Further, the preparation of a negative electrode active material using an aqueous solution containing polystyrene sulfonate and a flake-like graphite is described.

PTL 8 describes an electrode active material coating liquid containing an electrode active material coated with a polymer, and an electrode for a lithium ion secondary battery prepared by using the coating liquid.

PTL 9 describes a carbon anode material for a lithium ion battery, in which a layer of a polymer solid electrolyte is coated on the surface of natural graphite having a diameter of 10 to 30 $\mu$m.

Citation List

Patent Literature

PTL 1: JP-A 11-120992
PTL 2: JP-A2002-117851
PTL 3: JP-A 2007-95494
PTL 4: JP-A2002-134171
PTL 5: WO 2008/097723 A1
PTL 6: EP 1 906 472 A1
PTL 7: JP 2005 276604 A
PTL 8: JP 2008 066260 A
PTL 9: CN 1 412 873 A

Summary of Invention

Technical Problem

However, according to the investigations made by the present inventors, the polymer disclosed in PTL 1 is an ion-conducting polymer or a water-soluble polymer, and the reference says that when a carbon material is coated with the polymer of the type, then the initial charge/discharge efficiency and the cycle characteristics can be improved; however, in fact, the polymer is swollen by the electrolytic solution and further the adhesiveness of the polymer coating film to the carbon material is insufficient, and therefore the technique still has room for improvement.

On the other hand, PTL 2 discloses a carbon material that has, as adhered thereto, a polymer having an amino group of a functional group that has good adhesiveness to the surface of the carbon material; however, it has been clarified that using the carbon material of the type as a negative electrode active material improves the initial charge/discharge efficiency, but since the ionic conductivity of the polymer is insufficient, the interface resistance of the negative electrode (negative electrode resistance) tends to increase.

In addition, according to the techniques described in PTL 3 and 4, the initial charge/discharge efficiency could be improved in some degree as compared with that in the case of using an uncoated carbon material; however, the negative electrode resistance increase owing to the coating and the reductive decomposition of the electrolytic solution could not still be prevented sufficiently, and therefore a sufficient effect for gas generation prevention and cycle characteristics improvement could not be obtained.

The present invention has been made in consideration of the background art as above, and the object thereof is to provide a negative electrode active material for nonaqueous secondary batteries, which, in a nonaqueous secondary battery, can prevent the increase in the negative electrode resistance, can further more improve the initial charge/discharge efficiency, and can reduce the capacity loss accompanied by charge/discharge cycles.

Solution to Problem

The present inventors have assiduously studied for solving the above-mentioned problems and, as a result, have found that, in a negative electrode active material for nonaqueous secondary batteries that contains an active material (A) capable of occluding and releasing lithium ions (hereinafter this may be referred to as "active material (A)") and an organic compound (B), when a non-traditional compound is used as the organic compound (B), then there can be obtained a nonaqueous secondary battery which is excellent in cycle characteristics and in which the negative electrode resistance increase can be prevented and the initial charge/discharge efficiency and the gas generation preventing effect can be improved, and have completed the present invention.

Concretely, the organic compound (B) in the present invention is a compound satisfying at least three conditions that the compound is hardly soluble in a nonaqueous electrolytic solution, that the compound has a π-conjugated structure and that the electric conductivity of the compound at 25°C is 0.1 S/cm or less.

Here the detailed reason why the negative electrode active material for nonaqueous secondary batteries of the invention that contain the above-mentioned organic compound (B) exhibits the above-mentioned effect is not clear, but as a result of the investigations made by the present inventors, it may be considered that the excellent battery characteristics would be provided by the following effects.

Specifically, when the organic compound (B) and the active material (A) having the characteristics as above are contained in the negative electrode active material layer for a nonaqueous secondary battery, then the π-conjugated structure that the organic compound (B) has may specifically act on the surface of the active material (A) to thereby control the activity of the surface of the active material (A). Further, the π-conjugated structure can impart high adsorbability between the surface of the active material (A) and the organic compound (B).

In addition, since the organic compound (B) is hardly soluble in a nonaqueous electrolytic solution, the organic compound (B) having adsorbed to the active material (A) is prevented from being swollen by the nonaqueous electrolytic solution and, in addition, high adsorbability can be imparted between the surface of the active material (A) and the organic compound (B).

Further, since the organic compound (B) is a low-conductive material having an electric conductivity at 25°C of 0.1 S/cm or less, the electrolytic solution on the surface of the organic compound (B) contained in the negative electrode active material for nonaqueous secondary batteries can be prevented from reductive decomposition.

Specifically, the gist of the present invention is as described below.

<1> A negative electrode active material for nonaqueous secondary batteries, which comprises an active material (A) capable of occluding and releasing lithium ions and an organic compound (B), wherein:

the active material (A) is a spherical graphite, wherein optionally at least a part of the surface thereof is coated with a carbonaceous substance,
the organic compound (B) is hardly soluble in a nonaqueous electrolytic solution, has a π-conjugated structure, and has an electric conductivity at 25°C of 0.1 S/cm or less, the organic compound (B) being hardly soluble in a nonaqueous electrolytic solution when the dry weight reduction after having immersed the compound in a solvent prepared by mixing ethyl carbonate and ethylmethyl carbonate in a ratio by volume of 3/7 for 24 hours is 10% by mass or less,
the content of the organic compound (B) is 0.01% by mass or more and 10% by mass or less relative to the active material (A), and
the active material (A) is coated with the organic compound (B).

<2> The negative electrode active material for nonaqueous secondary batteries according to the item <1> above, wherein the organic compound (B) has an ionic group and an aromatic ring.
<3> The negative electrode active material for nonaqueous secondary batteries according to the item <1> or <2> above, wherein the weight-average molecular weight of the organic compound (B) is 500 or more and 1,000,000 or less.
<4> The negative electrode active material for nonaqueous secondary batteries according to item <1> above, wherein the organic compound (B) is at least one compound selected from a group consisting of polystyrenesulfonic acid, lithium polystyrenesulfonate, sodium polystyrenesulfonate, styrene-styrenesulfonic acid copolymer, styrene-lithium styrenesulfonate copolymer, styrene-sodium styrenesulfonate copolymer, polyanilinesulfonic acid, polyvinylbenzoic acid, lithium polyvinylbenzoate, sodium polyvinylbenzoate, styrene-vinylbenzoic acid copolymer, styrene-lithium vinylbenzoate copolymer, styrene-sodium vinylbenzoate copolymer, lithium naphthalenesulfonate and sodium naphthalenesulfonate.

Also, the present invention relates to <5> a negative electrode for nonaqueous secondary batteries, which is formed using the negative electrode active material for nonaqueous secondary batteries as described in any one of the items <1> to <4> above.

Also, the present invention relates to <6> a nonaqueous secondary battery having a positive electrode and a negative electrode capable of occluding/releasing lithium ions, and an electrolyte, wherein the negative electrode is the negative electrode for nonaqueous secondary batteries as described in the item <5> above.

Advantageous Effects of Invention

According to the present invention, there is provided a negative electrode active material for nonaqueous secondary batteries, which is useful in production of nonaqueous secondary batteries that have low initial irreversible capacity and little gas generation, and have excellent charge/discharge cycle stability. There are also provided a negative electrode for nonaqueous secondary batteries that uses the above-mentioned negative electrode active material for nonaqueous secondary batteries, and a nonaqueous secondary battery provided with the negative electrode.

Description of Embodiments

The contents of the present invention are described in detail hereinunder. The following description includes some examples (typical examples) of embodiments of the invention, and not overstepping the scope thereof, the present invention is not limited to these embodiments.

Here, "% by weight" and "% by mass" are synonymous to each other. Simple expression of "ppm" indicates "ppm by weight".

[Negative Electrode Active Material for Nonaqueous Secondary Batteries]

<Active Material (A)>

The negative electrode active material for nonaqueous secondary batteries of the present invention (hereinafter this may be referred to as "the active material of the present invention") contains an active material (A). The active material (A) is as defined in the claims.

The active material (A) has the shape of spheres.

Preferred are artificial graphite and natural graphite from the viewpoint of low cost and easiness in electrode production; and more preferred is natural graphite.

Preferably, the graphite has few impurities, and is, if desired, purified in any desired manner before use herein.

The natural graphite includes scaly graphite, flaky graphite, soil graphite, etc. The locality of the scaly graphite is mainly Sri Lanka, the locality of the flaky graphite is mainly Madagascar, China, Brazil, Ukraine, Canada, etc.; and the main locality of the soil graphite is the Korean Peninsula, China, Mexico, etc.

Of those natural graphites, soil graphite generally has a small particle size and has a low purity. As opposed to this, scaly graphite and flaky graphite have some advantages in that they have a high degree of graphitization and have a low content of impurities, and are therefore favorably used in the present invention.

The shape of the natural graphite is spherical, from the viewpoint of exhibiting the advantageous effects of the present invention, and the active material (A) is especially preferably a spheronized natural graphite.

More concretely, preferred is a spheronized natural graphite produced through spheronization of highly-purified flaky natural graphite. The method of spheronization will be described hereinunder.

The artificial graphite includes, for example, those produced by firing and graphitizing organic substances such as coal tar pitch, coal-based heavy oil, atmospheric residue, petroleum-based heavy oil, aromatic hydrocarbon, nitrogen-containing cyclic compounds, sulfur-containing cyclic compounds, polyphenylene, polyvinyl chloride, polyvinyl alcohol, polyacrylonitrile, polyvinyl butyral, natural polymer, polyphenylene sulfide, polyphenylene oxide, furfuryl alcohol resin, phenol-formaldehyde resin, imide resin, etc.

The firing temperature may be within a range of 2500°C or higher and 3200°C or lower, and in firing, a silicon-containing compound or a boron-containing compound may be used as a graphitization catalyst.

Next described are various physical properties of the active material (A). Preferably, the active material (A) satisfies at least one of the following physical properties.

(Mean Particle Size (d50))

The mean particle size (d50) of the active material (A) is generally 1 $\mu$m or more and 50 $\mu$m or less. Falling within the range can prevent process disadvantages such as striation in negative material forming materials.

The mean particle size (d50) is preferably 4 $\mu$m or more, more preferably 10 $\mu$m or more, and is preferably 30 $\mu$m or less, more preferably 25 $\mu$m or less.

In this description, the mean particle size (d50) means a volumetric basis median size. Concretely, 0.01 g of a sample is suspended in 10 mL of a 0.2 mass% aqueous solution of a surfactant, polyoxyethylene sorbitan monolaurate, introduced into a commercially-available laser diffraction/scattering particle sizer, irradiated with ultrasonic waves at 28 kHz, at an output of 60 W for 1 minute, and thus analyzed to measure a value of the volumetric basis median size of the sample in the particle sizer.

(Tap Density)

The tap density of the active material (A) is generally 0.7 g/cm$^3$ or more, preferably 1.0 g/cm$^3$ or more, and is generally 1.3 g/cm$^3$ or less, preferably 1.1 g/cm$^3$ or less.

When the tap density is too low, then the material is poor in high-speed charge/discharge characteristics when used as the negative electrode for nonaqueous secondary batteries; but on the other hand, when the tap density is too high, then the density of the active material (A) in the particles of the material to constitute negative electrode would be high so that the negative electrode forming material may lack in ductility and, as the case may be, it may be difficult to form high-density negative electrode sheets.

In the present invention, the tap density is defined as follows. Using a powder density measuring apparatus, a sample is dropped down through a sieve having an opening of 300 $\mu$m, into a cylindrical tap cell having a diameter of 1.6 cm and a volume capacity of 20 cm$^3$, then tapped at a stroke length of 10 mm for 1000 times, and the density obtained from the volume and the weight of the sample after tapped is defined as the tap density of the sample.

(Specific Surface Area (SA) by BET Method)

The specific surface area of the active material (A) as measured according to the BET method (BET method specific surface area) is generally 1 m$^2$/g or more and 11 m$^2$/g or less. Falling within the range could secure a sufficient site where Li ions move in and out and therefore could secure good high-speed charge/discharge characteristics and output characteristics when the active material is used as the negative electrode for nonaqueous secondary batteries, and accordingly, the activity of the active material to electrolytic solution can be controlled to reduce the initial irreversible capacity and further the battery capacity can be readily increased.

The BET specific surface area is preferably 1.2 m$^2$/g or more, more preferably 1.5 m$^2$/g or more, and is preferably and 10 m$^2$/g or less, more preferably 9 m$^2$/g or less, even more preferably 8 m$^2$/g or less.

In this description, the BET method specific surface area is a value measured according to a BET five-point method of a nitrogen gas adsorption distribution method, using a specific surface area measuring apparatus.

(X-Ray Parameter)

In the active material (A), the spacing $d_{002}$ of the plane (002), as measured according to a wide-angle X-ray diffraction method of the carbon material, is generally 0.335 nm or more and less than 0.340 nm, preferably 0.339 or less, more preferably 0.337 or less. When the value $d_{002}$ is less than 340 nm, then the active material can have suitable crystallinity, and when the active material is used as the negative electrode for nonaqueous secondary batteries, then the initial irreversible capacity can be prevented from increasing. 0.335 nm is a theoretical value of graphite.

(Raman R Value)

The Raman R value of the active material (A) is measured as follows. The intensity $I_A$ of the peak $P_A$ near 1580 cm$^{-1}$ and the intensity $I_B$ of the peak $P_B$ near 1360 cm$^{-1}$ are measured, and the intensity ratio R (R = $I_B/I_A$) is calculated and defined as the Raman R value.

The R value is generally 0.01 or more and 1 or less, preferably 0.6 or less. When the Raman value is lower than the range, then the crystallinity of the particle surface is too high, and if so and when highly densified, the crystals could be readily oriented in the direction parallel to the electrode plate to lower the load characteristics of batteries. On the other hand, when the value is higher than the range, then the crystallinity of the particle surface would be disordered to increase the reactivity thereof with electrolytic solution, and if so and when the material is used as the negative electrode for nonaqueous secondary batteries, there may occur efficiency reduction and increase in gas generation.

The Raman spectrum can be measured with a Raman spectrophotometer. Concretely, the particles to be analyzed are spontaneously dropped down into a measurement cell so that the cell is filled with the sample, and while the measurement cell is irradiated with argon ion laser light, the cell is rotated in the plane vertical to the laser light to measure the Raman spectrum.

| | |
|---|---|
| Argon ion laser wavelength: | 532 nm |
| Laser power on sample: | 25 mW |
| Resolution: | 4 cm$^{-1}$ |
| Measurement range: | 1100 cm$^{-1}$ to 1730 cm$^{-1}$ |

Peak intensity measurement, Peak half-value width measurement: Background treatment, smoothing treatment (convolution by simple average 5 points)

(Production Method for Active Material (A))

The active material (A) described hereinabove may be produced according to various known methods, and the production method for it is not specifically defined. Here, a production method for a spheronized natural graphite favorably used as the active material (A) in the present invention, from natural graphite is described.

The spheronized natural graphite can be obtained by spheronizing natural graphite. As the apparatus for use for the spheronization treatment, for example, usable here is an apparatus capable of repeatedly giving a mechanical action such as compression, friction, shear force or the like including interaction of particles of mainly impact force, to particles.

Concretely, an apparatus is preferred here, which has a rotor equipped with a large number of blades inside the casing thereof and in which the rotor is rotated at a high speed to thereby impart a mechanical action such as impact compression, friction, shear force or the like to the natural graphite material introduced inside the apparatus for surface treatment of the material therein.

Through the spheronization treatment, the flaky natural graphite is folded or the peripheral edge part thereof is spherically ground and the mother particles thereby come to be spherical. Fine powder of mainly 5 μm or less resulting from the grinding adheres to the mother particles. Preferably, the spheronization treatment is carried out under the condition that the surface functional group amount O/C value of the spheronized natural graphite could be generally 1% or more and 4% or less.

In this case, preferably, the spheronization treatment is carried out in an active atmosphere in order that the oxidation of the natural graphite surface could be promoted by the energy of the mechanical treatment and the acidic functional group could be introduced into the natural graphite surface. For example, in case where the treatment is carried out using the above-mentioned apparatus, it is desirable that the peripheral speed of the rotating rotor is generally from 30 to 100 m/sec, preferably from 40 to 100 m/sec, more preferably from 50 to 100 m/sec.

(Coating Treatment)

At least a part of the surface of the active material (A) for use in the present invention may be coated with a carbonaceous substance. The coating mode may be confirmed on the scanning electromicroscopic (SEM) picture of the material, etc.

The carbonaceous substance for use for the coating treatment includes amorphous carbon and graphites, which give different coated materials depending on the firing temperature in the coating treatment to be mentioned below.

Concretely, as a carbon precursor of the carbonaceous substance, the following materials (1) and (2) are preferred.

(1) At least one carbonizable organic substance selected from a group consisting of coal-based heavy oil, straight-run heavy oil, cracked petroleum heavy oil, aromatic hydrocarbon, N-ring compound, S-ring compound, polyphenylene, organic synthetic polymer, natural polymer, thermoplastic resin and thermosetting resin.
(2) One prepared by dissolving the carbonizable organic substance of the above (1) in a low-molecular organic solvent.

Of the above (1) and (2), more preferred is coal-based heavy oil, straight-run heavy oil or cracked petroleum heavy oil, or one prepared by dissolving such heavy oil in a low-molecular organic solvent, as the active material can be uniformly coated with the fired carbonaceous substance.

For the coating treatment, for example, when a spheronized natural graphite is used as the active material (A) to obtain a nuclear graphite, the carbon precursor to be the carbonaceous substance that acts as the coating material is mixed with the graphite and fired to give the active material (A) coated with the carbonaceous substance.

The firing temperature is generally 600°C or higher, preferably 700°C or higher, more preferably 900°C or higher, and is generally 2000°C or lower, preferably 1500°C or lower, more preferably 1200°C or lower, at which amorphous carbon can be obtained as the carbonaceous substance.

On the other hand, heat treatment at a firing temperature of generally 2000°C or higher, preferably 2500°C or higher and generally 3200°C or lower gives a graphite as the carbonaceous substance.

The amorphous carbon is carbon having low crystallinity, and the graphite is carbon having high crystallinity.

<Organic Compound (B)>

Next described is the organic compound (B) that is a constituent component of the negative electrode active material for nonaqueous secondary batteries of the present invention.

The organic compound (B) is preferably an organic compound that is hardly soluble in a nonaqueous electrolytic solution, that has a $\pi$-conjugated structure, and that has an electric conductivity at 25°C of 0.1 S/cm or less. It is considered that the organic compound (B) could effectively coat the negative electrode active material for nonaqueous secondary batteries of the present invention, especially the active material (A) therein.

In case where the organic compound (B) is used as the negative electrode for nonaqueous secondary batteries, the compound prevents the reaction of the active material (A) and the nonaqueous electrolytic solution to thereby effectively inhibit gas generation.

The organic compound (B) is hardly soluble in nonaqueous electrolytic solution, and therefore enhances the resistance of the negative electrode active material for nonaqueous secondary batteries of the present invention to nonaqueous electrolytic solution, and the organic compound (B) adsorbed by the active material (A) could hardly dissolve out into nonaqueous electrolytic solution.

The $\pi$-conjugated structure of the organic compound (B) acts with the $\pi$-plain structure part that the active material (A) has, and selectively coats the $\pi$-plain structure part of the surface of the active material (A), and therefore it is considered that the compound can effectively prevent gas generation and can prevent the increase in the negative electrode resistance.

Further, the organic compound (B) is a low-conductive material having an electric conductivity at 25°C of 0.1 S/cm or less, and therefore it is considered that the electrolytic solution can be prevented from being reductively decomposed on the surface of the organic compound (B).

In this description, "hardly soluble in nonaqueous electrolytic solution" is defined as follows. The organic compound (B) is immersed in a solvent prepared by mixing ethyl carbonate (EC) and ethylmethyl carbonate (EMC) in a ratio by volume of 3/7, for 24 hours, and the dry weight reduction before and after the immersion is 10% by mass or less.

In order that the organic compound (B) is hardly soluble in nonaqueous electrolytic solution, it is desirable that the compound has an ionic group.

The ionic group is a group capable of forming an anion or a cation in water, and its examples include a carboxylic acid group, a sulfonic acid group, a phosphoric acid group, a phosphonic acid group and their salts. The salts include lithium salts, sodium salts, potassium salts, etc.

Of those, preferred is a sulfonic acid group or its lithium salt or sodium salt, from the viewpoint of the initial irreversible capacity in use thereof for the negative electrode for nonaqueous secondary batteries.

In this description, the organic compound (B) has a $\pi$-conjugated structure, and this is defined as follows. The organic compound (B) is an unsaturated cyclic compound having a structure where atoms having $\pi$-electrons are aligned circularly, and satisfies the Huckel rule, in which the $\pi$-electrons are delocalized on the ring and the ring has a plane structure.

The compound having such a $\pi$-conjugated structure includes aromatic ring-having compounds. Concretely, there are mentioned monocyclic 5-membered rings such as furan, pyrrole, imidazole, thiophene, phosphole, pyrazole, oxazole, isoxazole, thiazole; monocyclic 6-membered rings such as benzene, pyridine, pyrazine, pyrimidine, pyridazine, triazine; bicyclic 5-membered ring + 6-membered ring such as benzofuran, isobenzofuran, indole, isoindole, benzothiophene, benzophosphole, benzimidazole, purine, indazole, benzoxazole, benzisoxazole, benzothiazole; bicyclic 6-membered ring + 6-membered ring such as naphthalene, quinoline, isoquinoline, quinoxaline, quinazoline, cinnoline; polycyclic rings such as those having a skeleton of anthracene, pyrene or the like.

Of those, preferred is benzene or naphthalene, from the viewpoint of inhibiting gas generation in use thereof for the negative electrode for nonaqueous secondary batteries.

The electric conductivity of the organic compound (B) at 25°C is 0.1 S/cm or less. The electric conductivity of 0.1 S/cm or less indicates that, in the present invention, the electrolytic solution is prevented from being reductively decomposed on the surface of the organic compound (B) contained in the negative electrode active material for nonaqueous secondary batteries.

Preferably, the electric conductivity of the organic compound (B) at 25°C is 0.01 S/cm or less, more preferably 0.001 S/cm or less. In general, the electric conductivity is larger than 0 S/cm.

The electric conductivity can be measured, for example, as follows. A film is formed on a glass substrate according to a film formation method of spin coating film formation, drop casting film formation or the like, and the electric conductivity of the film can be calculated from the reciprocal of the value obtained by multiplying the film thickness and the surface resistance value measured according to a four-terminal method.

The film thickness may be measured with KLA's level difference/surface roughness/fine profile measuring apparatus, Tencor $\alpha$ Step Model; and the surface resistance value according to a four-terminal method may be measured using Mitsubishi Chemical Analytic's Loresta-GP MCP-T610 Model.

The organic compound (B) described above for use herein may be commercially-available one, or may be synthesized according to a known method. The organic compound (B) may be a low-molecular compound or a high-molecular compound (polymer), but from the viewpoint of effectively preventing gas generation, preferred is a high-molecular.

Examples of the low-molecular compound include naphthalenesulfonic acid, lithium naphthalenesulfonate, sodium naphthalenesulfonate, benzenesulfonic acid, sodium benzenesulfonate, anilinesulfonic acid, sodium anilinesulfonate, lithium anilinesulfonate, anthracenesulfonic acid, sodium anthracenesulfonate, etc.

Above all, preferred is lithium naphthalenesulfonate or sodium naphthalenesulfonate from the viewpoint that the adsorbability thereof to the active material (A) is high.

In case where the organic compound (B) is a high-molecular compound, the weight-average molecular weight thereof is not specifically defined, but is generally 500 or more, preferably 1000 or more, more preferably 2000 or more, even more preferably 2500 or more. On the other hand, the weight-average molecular weight is generally 1,000,000 or less, preferably 500,000 or less, more preferably 300,000 or less, even more preferably 200,000 or less.

In this description, the weight-average molecular weight is a standard polystyrene-equivalent weight-average molecular weight that is measured through gel permeation chromatography (GPC) with a solvent tetrahydrofuran (THF), or a polyethylene glycol-equivalent weight-average molecular weight that is measured through GPC with an aqueous solvent or with a solvent of dimethylformamide (DMF) or dimethylsulfoxide (DMSO).

In case where the organic compound (B) is a high-molecular compound (polymer), the high-molecular compound preferably has an ionic group and an aromatic ring.

As the monomers to be the constitutive units that constitute the polymer, there are mentioned a monomer having an ionic group and a monomer having an aromatic ring. Also usable here is a monomer having both an ionic group and an aromatic ring.

In the case, the polymer may be a copolymer of a monomer having an ionic group but not having an aromatic ring and a monomer having an aromatic ring but not having an ionic group, or may be a polymer of a monomer having both an ionic group and an aromatic ring. Also usable here is a mixture of a polymer of a monomer having an ionic group and a polymer of a monomer having an aromatic ring.

Above all, from the stability of the organic compound (B) that coats the negative electrode active material for nonaqueous secondary batteries in an electrolytic solution, it is desirable that the organic compound (B) is a polymer of a monomer having both an ionic group and an aromatic ring.

The ionic group that the monomer has may be any of the above-mentioned ionic groups. Above all, preferred is a carboxylic acid group, a sulfonic acid group or a salt thereof, from the viewpoint of the stability in batteries and of the ability to prevent resistance increase.

Examples of the monomer having an ionic group and an aromatic ring include styrenesulfonic acid, lithium styrenesulfonate, sodium styrenesulfonate, aniline, anilinesulfonic acid, salts of anilinesulfonic acid, vinyl benzoate, salts of vinyl benzoate, etc.

Examples of the monomer having an ionic group but not having an aromatic ring include vinylsulfonic acid, lithium vinylsulfonate, sodium vinylsulfonate, acrylic acid, sodium acrylate, lithium acrylate, methacrylic acid, sodium methacrylate, lithium methacrylate, etc.

Examples of the monomer having an aromatic ring but not having an ionic group include styrene, benzyl acrylate, benzyl methacrylate, etc.

Specific examples of the polymer that includes a constitutive unit derived from the monomer of the type include styrene-vinyl sulfonic acid copolymer, styrene-sodium vinylsulfonate copolymer, styrene-lithium vinylsulfonate copolymer, polystyrenesulfonic acid, lithium polystyrenesulfonate, sodium polystyrenesulfonate, polyanilinesulfonic acid, lithium polyanilinesulfonate, sodium polyanilinesulfonate, styrene-styrenesulfonic acid copolymer, styrene-lithium styrenesulfonate copolymer, styrene-sodium styrenesulfonate copolymer, polyvinylbenzoic acid, lithium polyvinylbenzoate, sodium polyvinylbenzoate, styrene-vinylbenzoic acid copolymer, styrene-lithium vinylbenzoate copolymer, styrene-sodium vinylbenzoate copolymer, etc.

From the viewpoint of effectively inhibiting gas generation, preferred are polystyrenesulfonic acid, lithium polystyrenesulfonate, sodium polystyrenesulfonate, styrene-styrenesulfonic acid copolymer, styrene-lithium styrenesulfonate copolymer, styrene-sodium styrenesulfonate copolymer, polyvinylbenzoic acid, lithium polyvinylbenzoate, sodium polyvinylbenzoate, styrene-vinylbenzoic acid copolymer, styrene-lithium vinylbenzoate copolymer and styrene-sodium vinylbenzoate copolymer.

Further, more preferred are polystyrenesulfonic acid, lithium polystyrenesulfonate, sodium polystyrenesulfonate, styrene-lithium styrenesulfonate copolymer and styrene-sodium styrenesulfonate copolymer.

Above all, especially preferred are lithium polystyrenesulfonate, sodium polystyrenesulfonate, styrene-lithium styrenesulfonate copolymer and styrene-sodium styrenesulfonate copolymer, as the ability thereof to adsorb to the surface of active material, especially to the basal face of graphite is high.

Irrespective of being a low-molecular compound or a high-molecular compound, one or more of the organic compounds (B) may be used in the present invention either singly or as combined.

<Other Components>

The negative electrode active material for nonaqueous secondary batteries of the present invention may contain a conductive agent for increasing the electroconductivity of negative electrodes.

The conductive agent is not specifically defined, but carbon black such as acetylene black, ketjen black, furnace black or the like, or a fine powder of Cu, Ni or an alloy thereof having a mean particle size of at most 1 $\mu$m can be used as the conductive agent.

The amount of the conductive agent to be added is preferably at most 10% by mass relative to the negative electrode active material for nonaqueous secondary batteries of the present invention.

<Production Method for Negative Electrode Active Material for Nonaqueous Secondary Batteries>

The negative electrode active material for nonaqueous secondary batteries of the present invention may be obtained by mixing the above-mentioned active material (A) and the organic compound (B). As described below, the organic compound (B) may be mixed with the active material (A) in preparing a slurry of a negative electrode forming material in forming negative electrodes.

For facilitating the operation of mixing the active material (A) and the organic compound (B), the organic compound (B) may be dissolved or dispersed in a solvent to be in the form of solution, and the active material (A) is put thereinto. Subsequently, the system is well stirred in order that the organic compound (B) and the active material (A) could be uniformly mixed, or the organic compound (B) could be adhered to the surface of the active material (A). After fully mixed, the system is filtered or heated to remove the solvent, thereby giving the active material of the present invention.

The solvent includes water and an organic solvent such as ethyl methyl ketone, acetone, methyl isobutyl ketone, ethanol, methanol, etc. Water is preferred as easily available and providing little environmental load.

The heating is generally at from about 60 to about 120°C. After the solvent has been removed, the active material may be dried under reduced pressure at a temperature of generally 300°C or lower and 50°C or higher. Within the range, the drying efficiency is sufficient, readily providing other advantages that the battery performance reduction owing to solvent residue can be evaded, the organic compound (B) can be prevented from decomposing, and the interaction between the active material (A) and the organic compound (B) can be prevented from being lowered.

The drying temperature is preferably 250°C or lower and is preferably 100°C or higher.

<Negative Electrode Active Material for Nonaqueous Secondary Batteries>

In the negative electrode active material for nonaqueous secondary batteries of the present invention, thus obtained, it is considered that the organic compound (B) would effectively adsorb to and firmly cover the active material (A).

When the active material of the present invention is immersed in a nonaqueous electrolytic solution at 75°C for 3 days, the amount of the organic compound (B) to elute into the nonaqueous electrolytic solution is generally at most 30% by mass of the total amount of the organic compound (B), preferably at most 20% by mass, more preferably at most 10% by mass, even more preferably at most 5% by mass, and is generally at least 0.01% by mass, preferably at least 0.1% by mass.

The nonaqueous electrolytic solution to be used in measuring the amount of the organic compound (B) in the negative electrode active material for nonaqueous secondary batteries to elute into the nonaqueous electrolytic solution is a solvent prepared by mixing ethylene carbonate/dimethyl carbonate/ethylmethyl carbonate (volume ratio: 3/3/4). The method for measuring the elution amount is not specifically defined. For example, the negative electrode active material for nonaqueous secondary batteries to be analyzed is immersed in the nonaqueous electrolytic solution at 75°C for 3 days, and then the negative electrode active material for nonaqueous secondary batteries is taken out and dried, and the mass of the negative electrode active material for nonaqueous secondary batteries is measured before and after the immersion treatment. By analyzing the NMR spectrum of the negative electrode active material for nonaqueous secondary batteries taken before and after the immersion treatment, the elution amount may also be determined.

When the elution amount is less than 0.01% by mass, the surface of the active material could not be fully covered, and therefore the active material could hardly gain the effect of improving the initial charge/discharge efficiency and the effect of preventing gas generation; but on the other hand, when the elution amount is more than 2% by mass, then the negative electrode resistance may increase and the proportion of the active material (A) may lower, and therefore the capacity per the unit weight may thereby lower.

In the negative electrode active material for nonaqueous secondary batteries of the present invention, the content of the organic compound (B) is generally at least 0.01% by mass relative to the active material (A), preferably at least 0.1% by mass, and is generally at most 10% by mass, preferably at most 5% by mass. When the content is less than 0.01% by mass, then it would be difficult to effectively cover the active material (A); but on the other hand, when more than 10% by mass, then the interfacial resistance between the coating layer of the organic compound (B) and the active material (A) may increase.

The content of the organic compound (B) in the negative electrode active material for nonaqueous secondary batteries is, in principle, the amount of the organic compound (B) used in producing the negative electrode active material for nonaqueous secondary batteries, in case where a production method of drying the solution containing the organic compound (B) is employed in producing the negative electrode active material.

On the other hand, for example, in case where a production method of filtering the system for solvent removal is employed, the content of the organic compound (B) may be calculated from the weight reduction in TG-DTA analysis of the obtained active material of the present invention or from the amount of the organic compound (B) contained in the filtrate.

The mean particle size (d50) of the active material of the present invention may be generally at most 50 $\mu$m, and may be at least 1 $\mu$m. Falling within the range can prevent process disadvantages such as striation in negative material forming materials, in production of negative electrode plates.

The mean particle size (d50) is preferably at most 30 $\mu$m, more preferably at most 25 $\mu$m, and is preferably at least 4 $\mu$m, more preferably at least 10 $\mu$m. The method for measuring the mean particle size (d50) is as described above. d50 of the active material of the present invention can be controlled by changing d50 of the starting material of the active material (A).

[Negative Electrode for Nonaqueous Secondary Batteries]

The negative electrode active material for nonaqueous secondary batteries of the present invention comprises a collector and an active material layer formed on the collector, in which the active material layer contains at least the negative electrode active material for nonaqueous secondary batteries of the present invention. Preferably, the active material layer further contains a binder.

Not specifically defined, the binder is preferably one having an olefinic unsaturated bond in the molecule. Its specific examples include styrene-butadiene rubber, styrene-isoprene-styrene rubber, acrylonitrile-butadiene rubber, butadiene rubber, ethylene-propylene-diene copolymer, etc.

Using the binder of the type having an olefinic unsaturated bond, the swellability of the active material layer to electrolytic solution can be reduced. Above all, preferred is styrene-butadiene rubber as easily available.

Combining the binder of the type having an olefinic unsaturated bond in the molecule with the negative electrode active material for nonaqueous secondary batteries of the present invention enhances the mechanical strength of negative electrode plates. Negative electrode plates having a high mechanical strength can be prevented from being deteriorated through charge/discharge and therefore can have a long cycle life.

The binder having an olefinic unsaturated bond in the molecule is preferably one having a large molecular weight and/or a high unsaturated bond proportion.

The molecular weight of the binder is, as the weight-average molecular weight thereof, generally 10,000 or more and 1,000,000 or less. Within the range, both the mechanical strength and the flexibility of negative electrode plates can be controlled to be good. The weight-average molecular weight is preferably at least 50,000 and is preferably at most 300,000.

The proportion of the olefinic unsaturated bond in the molecule of the binder is, as the molar number of the olefinic unsaturated bond per gram of the total binder, generally from $2.5 \times 10^{-7}$ mol to $5 \times 10^{-6}$ mol. Falling within the range, the strength improving effect is sufficient and the flexibility is also good. The molar number is preferably from $8 \times 10^{-7}$ to $1 \times 10^{-6}$.

The degree of unsaturation of the binder having an olefinic unsaturated bond is generally from 15% to 90%. The degree of unsaturation is preferably at least 20%, more preferably at least 40%, and is preferably at most 80%. In this description, the degree of unsaturation is the proportion (%) of unsaturated bonds relative to the recurring unit number in the polymer.

As the binder, one not having an olefinic unsaturated bond may also be usable here. By combining a binder having an olefinic unsaturated bond in the molecule and a binder not having an olefinic unsaturated bond, it may be expected that the coatability with the negative electrode forming material that contains the active material of the present invention and the binder can be improved.

The mixing ratio of the binder not having an olefinic unsaturated bond to the binder having an olefinic unsaturated bond is generally at most 150% by mass, for preventing the strength of the active material layer from lowering, preferably at most 120% by mass.

Examples of the binder not having an olefinic unsaturated bond include tackifying polysaccharides such as methyl cellulose, carboxymethyl cellulose, starch, carrageenan, pullulan, guar gum, xanthan gum, etc.; polyethers such as polyethylene oxide, polypropylene oxide, etc.; vinyl alcohols such as polyvinyl alcohol, polyvinyl butyral, etc.; poly acids or metal salts of those polymers, such as polyacrylic acid, polymethacrylic acid, etc.; fluorine-containing polymers such as polyvinylidene fluoride, etc.; alkane polymers such as polyethylene, polypropylene, etc., or their copolymers.

The negative electrode for nonaqueous secondary batteries of the present invention can be formed by dispersing the negative electrode active material for nonaqueous secondary batteries of the present invention and optionally a binder and a conductive agent in a dispersion medium to give a slurry (negative electrode forming material), followed by applying it onto a collector and drying it thereon. The dispersion medium may be an organic solvent such as alcohol or the like, or water.

In preparing the slurry, the organic compound (B) may be added to and mixed in the active material (A) along with a binder and others thereinto so as to produce the negative electrode active material for nonaqueous secondary batteries of the present invention and simultaneously prepare the slurry for negative electrode production at a time.

The binder is used generally in an amount of at least 0.1% by mass relative to the negative electrode active material for nonaqueous secondary batteries of the present invention, preferably at least 0.2% by mass. When the proportion of the binder is at least 0.1% by mass relative to the active material of the present invention, then the binding force between the active materials as well as between the active material and the collector could be enough to prevent the trouble of battery capacity reduction and cycle characteristic worsening that may occur owing to release of the active material of the present invention from negative electrode.

Preferably, the amount of the binder is generally at most 10% by mass relative to the negative electrode active material for nonaqueous secondary batteries of the present invention, preferably at most 7% by mass. When the proportion of the binder is at most 10% by mass relative to the active material of the present invention, then the negative electrode capacity can be prevented from lowering, and in addition, in case where the nonaqueous secondary battery to which the present invention is directed is a lithium ion battery, a problem that lithium ions may be prevented from being absorbed by and released from the active material can be evaded.

These constituent components are mixed, and then optionally defoamed to give a slurry of a negative electrode forming material.

The negative electrode collector may be any one that has heretofore been known to be usable in this technical field. For example, usable here are copper, copper alloy, stainless steel, nickel, titanium and carbon.

The shape of the collector is generally a sheet-like one, but also preferred are those produced by roughing the surfaces of the sheet-like ones, as well as nets or perforated metals, etc.

The density of the active material layer of the present invention, when formed into a negative electrode for secondary batteries, varies depending on the use thereof, but for use where the input/output characteristics are considered to be important, such as those for in-car products, power tools or the like, the density is generally from 1.1 $g/cm^3$ to 1.65 $g/cm^3$. Falling within the range, it could be possible to evade the problem of contact resistance increase between particles owing to a too low density, while on the other hand, it could also be possible to prevent the rate characteristics from worsening owing to a too high density.

The density is preferably at least 1.2 $g/cm^3$, more preferably at least 1.25 $g/cm^3$.

On the other hand, for use where the capacity is considered to be important, for example, for mobile appliances such as portable phones or personal computers, the density of the active material layer is generally from 1.45 $g/cm^3$ to 1.9 $g/cm^3$. Falling within the range, a trouble of battery capacity reduction per unit volume owing to a too low density could be evaded; while on the other hand, it could also be possible to prevent the rate characteristics from worsening owing to a too high density.

The density is preferably at least 1.55 $g/cm^3$, more preferably at least 1.65 $g/cm^3$, even more preferably at least 1.7 $g/cm^3$.

[Nonaqueous Secondary Battery]

The members of the nonaqueous secondary batter of the present invention are exemplified in detail hereinunder; however, the materials usable here and their production method are not limited to the following exemplifications.

The basic configuration of the nonaqueous secondary battery of the present invention may be the same as that of any conventionally-known nonaqueous secondary battery and, in general, comprises a positive electrode and a negative electrode capable of occluding/releasing lithium ions, and an electrolyte (generally referred to as "nonaqueous electrolytic solution), in which the negative electrode is the negative electrode for nonaqueous secondary batteries of the present invention.

The constituent elements of the nonaqueous secondary battery are described below.

<Positive Electrode>

The positive electrode is one produced by forming a positive electrode active material layer containing a positive electrode active material and a binder, on a collector.

The positive electrode active material includes metal chalcogen compounds capable of occluding/releasing alkali metal cations such as lithium ions or the like during charging/discharging. Above all, preferred are metal chalcogen compounds capable of occluding/releasing lithium ions.

The metal chalcogen compounds include transition metal oxides such as vanadium oxides, molybdenum oxides, manganese oxides, chromium oxides, titanium oxides, tungsten oxides, etc.; transition metal sulfides such as vanadium sulfides, molybdenum sulfides, titanium sulfides, CuS, etc.; transition metal phosphorus/sulfur compounds such as $NiPS_3$, $FePS_3$, etc.; transition metal selenium compounds such as $VSe_2$, $NbSe_3$, etc.; transition metal composite oxides such as $Fe_{0.25}V_{0.75}S_2$, $Na_{0.1}CrS_2$, etc.; transition metal composite sulfides such as $LiCoS_2$, $LiNiS_2$, etc.

Above all, preferred are $V_2O_5$, $V_5O_{13}$, $VO_2$, $Cr_2O_5$, $MnO_2$, $TiO_2$, $MoV_2O_5$, $LiCoO_2$, $LiNiO_2$, $LiMn_2O_4$, $TiS_2$, $V_2S_5$, $Cr_{0.25}V_{0.75}S_2$ and $Cr_{0.5}V_{0.5}S_2$ from the viewpoint of absorption/release of lithium ions; and more preferred are $LiCoO_2$, $LiNiO_2$, $LiMn_2O_4$, and lithium transition metal composite oxides derived from those by partly substituting the transition metal therein with any other metal.

One alone or two or more of these positive electrode active materials may be used here either singly or as mixed.

Not specifically defined, the binder for the positive electrode may be selected from any known one. For example, there are mentioned inorganic compounds such as silicates, water glass, etc.; resins not having an unsaturated bond such as Teflon (registered trademark), polyvinylidene fluoride (PVdF), etc. Above all, preferred are resins not having an unsaturated bond as being hardly decomposed during oxidation reaction.

The weight-average molecular weight of the binder is generally at least 10,000 and is generally at most 3,000,000. The weight-average molecular weight is preferably at least 100,000, and is preferably at most 1,000,000.

A conductive agent may be incorporated in the positive electrode active material layer for increasing the electroconductivity of positive electrodes. The conductive agent is not specifically defined, including carbon powders of acetylene black, carbon black, graphite or the like, and various metal fibers, powders, foils, etc.

In the same manner as that of the production method for negative electrodes mentioned above, the positive electrode in the present invention may be produced by dispersing the active material and optionally a binder and/or a conductive agent in a dispersion medium to give a slurry, then applying the slurry onto the surface of a collector and drying it thereon. The collector for the positive electrode is not specifically defined, and its examples include aluminium, nickel, stainless steel (SUS), etc.

<Electrolyte>

The electrolyte to be used in the nonaqueous electrolytic solution in the nonaqueous secondary battery of the present invention is not specifically defined, for which is employable any one known electrolyte. Using an organic polymer compound or the like, the nonaqueous electrolytic solution may be formed into gel-like, rubbery or solid sheet-like ones.

The electrolyte is preferably a lithium salt. Specific examples of the electrolyte include $LiPF_6$, $LiBF_4$, $LiCF_3SO_3$, $LiN(CF_3SO_2)_2$, $LiN(C_2F_5SO_2)_2$, lithium bis(oxalato)borate, lithium difluorooxalatoborate, lithium tetrafluorooxalatophosphate, lithium difluorobis(oxalato)phosphate, lithium fluorosulfonate, etc.

One alone or two or more types of those electrolytes may be used here either singly or as combined in any desired ratio.

The concentration of the lithium salt in the nonaqueous electrolytic solution may be any one but is generally at least 0.5 mol/L, preferably at least 0.6 mol/L, more preferably at least 0.8 mol/L, and is generally at most 3 mol/L, preferably at most 2 mol/L, more preferably at most 1.5 mol/L.

When the total molar concentration of the lithium salt falls within the above range, then the electric conductivity of the nonaqueous electrolytic solution could be enough, and on the other hand, any trouble of electric conductivity reduction and battery performance degradation to be caused by viscosity increase owing to excessive salt could be prevented.

<Nonaqueous Solvent>

Not specifically defined, the nonaqueous solvent that the nonaqueous electrolytic solution contains may be any solvent that may have no bad influence on battery characteristics when used in batteries.

Examples of the nonaqueous solvent generally used include carbonate compounds of linear carbonates such as dimethyl carbonate, ethylmethyl carbonate, diethyl carbonate, and the like, and cyclic carbonates such as ethylene carbonate, propylene carbonate, butylene carbonate, etc.; linear carboxylates such as methyl acetate, ethyl acetate, methyl propionate, ethyl propionate, etc.; cyclic carboxylates such as γ-butyrolactone, etc.; linear ethers such as dimethoxyethane, diethoxyethane, etc.; cyclic ethers such as tetrahydrofuran, 2-methyltetrahydrofuran, tetrahydropyran, etc.; nitriles such as acetonitrile, propionitrile, benzonitrile, butyronitrile, valeronitrile, etc.; phosphates such as trimethyl phosphate, triethyl phosphate, etc.; sulfur-containing compounds such as ethylene sulfite, 1,3-propanesultone, methyl methanesulfonate, sulfolane, dimethyl sulfone, etc.

In these compounds, hydrogen atoms may be partly substituted with a halogen atom.

One alone or two or more types of the above nonaqueous solvents may be used here either singly or as combined, but combined use of two or more compounds is preferred. For example, preferred is combined use of a high-permittivity solvent such as a cyclic carbonate, a cyclic carboxylate or the like, and a low-viscosity solvent such as a linear carbonate or a linear carboxylate.

<Auxiliary Agent>

In addition to the above-mentioned electrolyte and nonaqueous solvent, any auxiliary agent may be incorporated in the nonaqueous electrolytic solution in accordance with the intended use. As the auxiliary agent having the effect of forming a coating film on the surface of negative electrode of prolonging the life of batteries, there are mentioned unsaturated cyclic carbonates such as vinylene carbonate, vinylethylene carbonate, ethynylethylene carbonate, etc.; fluorine atom-containing cyclic carbonates such as fluoroethylene carbonate, etc.; fluorinated unsaturated cyclic carbonates such as 4-fluorovinylene carbonate, etc.; isocyanate compounds represented by the following general formula (1), etc.

Above all, from the viewpoint of inhibiting gas generation , preferred are vinylene carbonate and isocyanate compounds represented by the following general formula (1):

[Chem. 1]

$$A\text{-}B\text{-}N\text{=}C\text{=}O \qquad (1)$$

In the above formula, A represents a hydrogen atom, a halogen atom, a vinyl group, an isocyanate group, a $C_1$-$C_{20}$ monovalent aliphatic hydrocarbon group (optionally having a hetero atom) or a $C_6$-$C_{20}$ monovalent aromatic hydrocarbon group (optionally having a hetero atom). B represents an oxygen atom, $SO_2$, a $C_1$-$C_{20}$ divalent aliphatic hydrocarbon group (optionally having a hetero atom) or a $C_6$-$C_{20}$ divalent aromatic hydrocarbon group (optionally having a hetero atom).

Examples of the isocyanate compound represented by the general formula (1) include the following compounds.

Diisocyanato sulfone, diisocyanato ether, trifluoromethane isocyanate, pentafluoroethane isocyanate, trifluoromethanesulfonyl isocyanate, pantefluoroethanesulfonyl isocyanate, benzenesulfonyl isocyanate, p-toluenesulfonyl isocyanate, 4-fluorobenzenesulfonyl isocyanate, 1,3-diisocyanatopropane, 1,3-diisocyanato-2-fluoropropane, 1,4-diisocyanatobutane, 1,4-diisocyanato-2-butene, 1,4-diisocyanato-2-fluorobutane, 1,4-diisocyanato-2,3-difluorobutane, 1,5-diisocyanatopentane, 1,5-diisocyanato-2-pentene, 1,5-diisocyanato-2-methylpentane, 1,6-diisocyanatohexane, 1,6-diisocyanato-2-hexene, 1,6-diisocyanato-3-hexene, 1,6-diisocyanato-3-fluorohexane, 1,6-diisocyanato-3,4-difluorohexane, 1,7-diisocyanatoheptane, 1,8-diisocyanatooctane, 1,10-diisocyanatodecane, 1-isocyanatoethylene, isocyanatomethane, 1-isocyanatoethane, 1-isocyanato-2-methoxyethane, 3-isocyanato-1-propene, isocyanatocyclopropane, 2-isocyanatopropane, 1-isocyanatopropane, 1-isocyanato-3-methoxypropane, 1-isocyanato-3-ethoxypropane, 2-isocyanato-2-methylpropane, 1-isocyanatobutane, 2-isocyanatobutane, 1-isocyanato-4-methoxybutane, 1-isocyanato-4-ethoxybutane, methylisocyanate formate, isocyanatocyclopentane, 1-isocyanatopentane, 1-isocyanato-5-methoxypentane, 1-isocyanato-5-ethoxypentane, 2-(isocyanatomethyl)furan, isocyanatocyclohexane, 1-isocyanatohexane, 1-isocyanato-6-methoxyhexane, 1-isocyanato-6-ethoxyhexane, ethylisocyanatoacetate, isocyanatocyclopentane, isocyanatomethyl(cyclohexane), 1-isocyanatoheptane, ethyl 3-isocyanatopropanoate, isocyanatocyclooctane, 2-isocyanatoethyl-2-methyl acrylate, 1-isocyanatooctane, 2-isocyanato-2,4,4-trimethylpentane, butyl isocyanatoacetate, ethyl 4-isocyanatobutanoate, 1-isocyanatononane, 1-isocyanatoadamantane, 1-isocyanatodecane, ethyl 6-isocyanatohexanoate, 1,3-bis(isocyanatomethyl)cyclohexane, dicyclohexylmethane diisocyanate, 1-isocyanatoundecane, diisocyanatobenzene, toluene diisocyanate, xylene diisocyanate, ethyldiisocyanatobenzene, trimethyldiisocyanatobenzene, diisocyanatonaphthalene, diisocyanatobiphenyl, diphenylmethane diisocyanate, 2,2-bis(isocyanatophenyl)hexafluoropropane, allyl isocyanate, vinyl isocyanate.

Above all, preferred are diisocyanate compounds having a structure represented by the following formula (2).

[Chem. 2]

$$OCN\text{-}(CH_2)_x\text{-}NCO \qquad (2)$$

The compound represented by the formula (2) can effectively enhance the resistance to physical deformation of expansion/contraction of electrodes accompanied by charge/discharge. This is because the linear methylene group in the compound can be taken in the coating film and/or the electrode structure to thereby impart suitable elasticity to the electrode structure.

Accordingly, for this purpose, the length of the methylene group is important, and in the formula, x is preferably an integer of from 4 to 12, more preferably an integer of from 4 to 8.

Concretely, preferred are 1,4-diisocyanatobutane, 1,5-diisocyanatopentane, 1,6-diisocyanatohexane, 1,7-diisocyanatoheptane, 1,8-diisocyanatooctane, etc.

In the present invention, the concentration of the above-mentioned auxiliary agent in the composition of the nonaqueous electrolytic solution may be any one not markedly detracting from the advantageous effects of the present invention, but is generally at least 0.01% by mass, preferably at least 0.05% by mass, more preferably at least 0.1% by mass, and is generally at most 5% by mass, preferably at most 3% by mass, more preferably at most 1.5% by mass.

Falling within the above range, the chemical and physical stability in batteries can be fully enhanced, and any excessive resistance increase owing to coating film formation can be prevented.

Apart from the above-mentioned auxiliary agent, there are mentioned here as an overcharge inhibitor for effectively inhibiting explosion and ignition of batteries in an overcharged state, an aromatic compound such as biphenyl, cyclohexylbenzene, diphenyl ether, t-butylbenzene, t-pentylbenzene, diphenyl carbonate, methylphenyl carbonate, etc.

As an auxiliary agent for improving cycle characteristics and low-temperature discharge characteristics of batteries, there are mentioned lithium salts such as lithium monofluorophosphate, lithium difluorophosphate, lithium fluorosulfonate, lithium bis(oxalato)borate, lithium difluorooxalatoborate, lithium tetrafluorooxalatophosphate, lithium difluorobis(oxalato)phosphate, etc.

As an auxiliary agent for improving capacity retention characteristics and cycle characteristics after high-temperature storage, there are mentioned sulfur-containing compounds such as ethylene sulfite, propanesultone, propenesultone, etc.; carboxylic acid anhydrides such as succinic anhydride, maleic anhydride, citraconic anhydride, etc.; nitrile compounds such as succinonitrile, glutaronitrile, adiponitrile, pimelonitrile, etc.

<Separator>

In the nonaqueous secondary battery, in general, a separator is interposed between the positive electrode and the negative electrode to prevent shorting. In this case, in general, the above-mentioned nonaqueous electrolytic solution is infiltrated in the separator.

The material and the shape of the separator are not specifically defined, for which any known ones may be employed here not markedly detracting from the advantageous effects of the present invention. Above all, usable here are resins, glass fibers, inorganic substances and the like, formed of a material stable for the nonaqueous electrolytic solution. Preferred are a porous sheet, a nonwoven fabric or the like excellent in liquid retentivity.

AS the material for the separator of resin or glass fibers, for example, usable are polyolefins such as polyethylene, polypropylene, etc.; as well as aromatic polyamide, polytetrafluoroethylene, polyether sulfone, glass filter, etc.

Preferred are glass filter and polyolefin; and more preferred is polyolefin.

One alone or two or more of these materials may be used here either singly or as combined in any desired manner and in any desired ratio.

The thickness of the separator may be any one, and is typically 1 $\mu$m or more, preferably 5 $\mu$m or more, more preferably 10 $\mu$m or more, and is typically 50 $\mu$m or less, preferably 40 $\mu$m or less, more preferably 30 $\mu$m or less.

When the separator is thinner than the above range, then the insulation quality and the mechanical strength may lower. On the other hand, when thicker than the range, not only the battery performance such as rate characteristics and others may worsen but also the energy density as a whole of the nonaqueous secondary battery may lower.

On the other hand, the inorganic material for use for the separator includes, for example, oxides such as alumina, silicon dioxide, etc.; nitrides such as aluminium nitride, silicon nitride, etc.; sulfates such as barium sulfate, calcium sulfate, etc.; and those materials that are granular or fibrous ones are usable here.

Examples

Embodiments of the present invention are described in more detail with reference to the following Examples;

however, the present invention is not restricted by these Examples.

Methods for evaluation made in Examples and Comparative Examples are described below.

<Mean Particle Size (d50)>

The mean particle size (d50) of the active material (A) was measured as follows: 0.01 g of a sample of the active material (A) was suspended in 10 ml of an aqueous 0.2 mass% solution of a surfactant, polyoxyethylene sorbitan monolaurate, then introduced into a laser diffraction/scattering particle sizer (product name: HORIBA's LA-920), and irradiated with 28-kHz ultrasonic waves at an output of 60 W for 1 minute. In the measuring apparatus, the volume-based median size was measured as the mean particle size of the sample.

<Tap Density>

The tap density of the active material (A) was measured as follows: Using a powder density measuring apparatus, a sample is dropped down through a sieve having an opening of 300 $\mu$m, into a cylindrical tap cell having a diameter of 1.6 cm and a volume capacity of 20 cm$^3$ to fill up the cell, then tapped at a stroke length of 10 mm for 1000 times. The density obtained from the volume and the weight of the sample after tapped is defined as the tap density of the sample.

<BET Method Specific Surface Area (SA)>

The BET method specific surface area of the active material (A) was measured according to a BET five-point method of a nitrogen gas adsorption distribution method, using a specific surface area measuring apparatus.

<Slurry Preparation>

20 g of an active material and 20 g of an aqueous solution of carboxymethyl cellulose (1% by mass) were mixed, kneaded with a kneading machine (Awatori Neritaro, by Thinky) at 2000 rpm for 5 minutes, and then defoamed at 2200 rpm for 1 minute, and 0.5 g of an aqueous dispersion of styrene-butadiene rubber (40% by mass) was added thereto and again kneaded under the same condition as above to prepare an active material slurry.

The active material is one produced in Examples or Comparative Examples to be given below.

<Production of Electrode Plate>

A copper foil (thickness 18 $\mu$m) was put on Tester Sangyo's Auto Film Applicator, and adsorbed thereto under negative pressure. A suitable amount of the prepared active material slurry was put on the copper foil, and the Tester Sangyo's Auto Film Applicator was swept at a rate of 10 mm/sec so that the copper foil was coated with the slurry.

The copper foil coated with the active material slurry was dried in an inert oven (EPEC-75, by Isuzu Manufacturing) to give an electrode plate with the active material layer formed on the copper foil (90°C, 50 minutes, nitrogen stream 10 L/min).

Subsequently, the electrode plate was led to pass through a pressing machine (3-ton mechanical precision roll press) to compress the active material layer so that the density of the active material layer could be 1.60 $\pm$ 0.03 g/cm$^3$, thereby preparing an electrode sheet.

On the electrode sheet, the part of the copper foil coated with the active material slurry was blanked out with a blanking punch ($\phi$ = 12.5 mm, SNG, by NOGAMIGIKEN), and the weight was measured and the thickness thereof was measured with a thickness meter (IDS-112, by Mitsutoyo). The weight per unit area thereof and the density of the active material layer were calculated.

<Production of Coin Cell>

The produced electrode sheet was blanked out into a disc electrode having a diameter of 12.5 mm. A lithium metal foil was blanked out into disc having a diameter of 14 mm as a counter electrode. Between the two electrodes, there was arranged a separator (formed of a porous polyethylene film) infiltrated with an electrolytic solution that had been prepared by dissolving $LiPF_6$ in a mixed solution of ethylene carbonate/dimethyl carbonate/ethylmethyl carbonate = 15/80/5 (by volume) to be 1.2 mol/L therein, thereby producing a 2016 coin-type battery using the above-mentioned electrolytic solution.

All the operation was carried out in a globe box (OMNI-LAB, by Vacuum Atmospheres, filled with Ar and having an oxygen concentration of at most 0.2 ppm and a moisture concentration of 0.5 ppm). Before brought into the globe box, the members and others for the coin cell were dried with a vacuum drier (Vos-451SD, by TOKYO RIKAKIKAI) for 12 hours or more.

<Charge/Discharge Evaluation of Coin Cell>

According to the charge/discharge program shown in Table 1 below, the cell was tested fro charge/discharge evaluation.

[Table 1]

Table 1 - Charge/Discharge Evaluation Program for Coin Cell

| Cycle | Step | | | |
|---|---|---|---|---|
| | 1 | 2 | 3 | 4 |
| 1 | pause 24 h | | | |
| 2 | CC-CV charge CC: 0.216 mA CV: 10 mA cutoff condition: 350 mAh/g | pause 10 min | CC discharge CC: 0.432 mA cutoff condition: 1500 mA | pause 10 min |
| 3 | CC-CV charge CC: 0.216 mA CV: 5 mA cutoff condition: 0.02 mA | pause 10 min | CC discharge CC: 0.432 mA cutoff condition: 1500 mA | pause 10 min |
| 4 | CC-CV charge CC: 0.216 mA CV: 5 mA cutoff condition: 0.02 mA | pause 10 min | CC discharge CC: 0.432 mA cutoff condition: 1500 mA | pause 10 min |
| 5 | pause 10 min | | | |

In the Table, "CC-CV charge" means a cycle of constant charge at a constant current followed by charge at a constant voltage to reach the cutoff condition. "CC discharge" indicates discharge at a constant current to reach the cutoff condition.

The initial charge/discharge efficiency (%) and the capacity loss (mAh/g) were calculated according to the following formulae.

$$\text{Initial Charge/Discharge Efficiency (\%)} = \text{discharge capacity at 4th cycle}/(\text{discharge capacity at 4th cycle} + \text{capacity loss at 2nd, 3rd and 4th cycles}) \times 100 \text{ (\%)}$$

$$\text{Capacity Loss (mAh/g)} = \text{2nd cycle (charge capacity - discharge capacity)} + \text{3rd cycle (charge capacity - discharge capacity)} + \text{4th cycle (charge capacity - discharge capacity)}$$

<Production of Laminate Cell>

As the positive electrode active material, used was lithium nickel-manganese-cobaltate ($LiNi_{1/3}Mn_{1/3}Co_{1/3}O_2$). This was mixed with a conductive agent and a binder, polyvinylidene fluoride (PVdF) to prepare a slurry. The obtained slurry was applied onto an aluminium foil having a thickness of 15 $\mu$m and dried, and the rolled with a pressing machine. This was cut into the shape of a positive electrode active material layer, having a size of 30 mm in width and 40 mm in length and having the uncoated part for collector, and this is a positive electrode.

The density of the positive electrode active material layer was 2.6 g/cm$^3$.

The negative electrode was produced as follows: The electrode sheet produced according to the above-mentioned method was cut into the shape of a negative electrode active material layer, having a size of 32 mm in width and 42 mm in length and having the uncoated part for collector tab joint. The density of the negative electrode active material layer was 1.6 g/cm$^3$.

One positive electrode and one negative electrode were so arranged that the active material faces thereof could face to each other, and the porous polyethylene sheet separator was sandwiched between the electrodes. In this, the two were made to face to each other so that the positive electrode active material face could not overstep the area of the negative electrode active material face.

A collector tab was welded to the uncoated part of the positive electrode and the negative electrode to prepare an electrode structure. Using a laminate sheet of a polypropylene film, an aluminium foil having a thickness of 0.04 mm and a nylon film as laminated in that order (having a total thickness of 0.1 mm), the electrode structure was sandwiched between the laminate sheets in such a manner that the polypropylene film could be inside, and except one side for electrolytic solution injection, the regions not having the electrode were heat-sealed.

Subsequently, 200 $\mu$l of a nonaqueous electrolytic solution (prepared by dissolving lithium hexafluorophosphate (LiPF$_6$) in ethylene carbonate (EC)/dimethyl carbonate (DMC)/ethylmethyl carbonate (EMC) = 3/3/4 (by volume) to have a concentration of 1.0 mol/L) was injected into the active material layer and fully infiltrated into the electrodes, and thereafter sealed up to produce a laminate cell.

The rating capacity of the battery is 34 mAh.

<Conditioning of Laminate Cell and Measurement of Initial Gas Amount>

In an atmosphere at 25°C, the cell was processed for initial conditioning at a voltage ranging from 4.2 to 3.0 V and at a current value of 0.2 C (1 C means the current value for discharging the rating capacity by one-hour rate discharge capacity for 1 hour). Before and after the conditioning thereof, the volume of the laminate cell was measured, and the volume change was considered to be the initial gas amount. For the volume measurement of the laminate cell, used was an Archimedes method with ethanol as an immersion liquid.

<Measurement of Conserved Gas Amount in Laminate Cell>

Under the condition of 85°C for 1 hour, the laminate cell was stored at high temperature, and after thus stored, the gas generation amount was measured. The volume change of the laminate cell before and after the storage was considered to be the gas generation amount. For the volume measurement, used was an Archimedes method with ethanol as an immersion liquid.

[Example 1]

<Preparation of Negative Electrode Active Material for Nonaqueous Secondary Batteries>

The active material (A) was prepared as follows: 50 g of spheronized natural graphite (mean particle size (d50) = 17 $\mu$m, BET method specific surface area (SA) = 6.7 m$^2$/g, tap density = 1.02 g/cm$^3$) and 50 g of an aqueous solution 1 of an organic compound (aqueous 0.1 mass% solution of lithium polystyrenesulfonate prepared by adding 49.83 g of distilled water to 0.167 g of an aqueous 30 mass% solution of Aldrich's lithium polystyrenesulfonate (weight-average molecular weight: 75000) were mixed in a flask, heated up to 95°C, and with stirring, the solvent was evaporated away to prepare a powdery, negative electrode active material A for nonaqueous secondary batteries.

240 g of the active material A and 400 $\mu$l of an electrolytic solution (ethylene carbonate (EC)/dimethyl carbonate (DMC)/ethylmethyl carbonate (EMC) = 3/3/4 (by volume)) were put into a laminate pack, and sealed up with a heat sealer. The cell was put into a thermostat tank at 75°C and stored therein for 3 days.

After the storage test, the laminate pack was taken out, and the contents were dried to solidness, and the residual solid was dissolved in a heavy solvent for NMR (d-DMSO) and analyzed through $^1$H-NMR. From the results, the eluted organic compound, lithium polystyrenesulfonate was quantified and was at most 2% by mass.

[Example 2]

A powdery, negative electrode active material B for nonaqueous secondary batteries was prepared in the same manner as in Example 1, except that the aqueous solution 1 of organic compound was changed to 50 g of an aqueous solution 2 (aqueous solution of 0.2 mass% lithium polystyrenesulfonate).

[Example 3]

A powdery, negative electrode active material C for nonaqueous secondary batteries was prepared in the same manner as in Example 1, except that the aqueous solution 1 of organic compound was changed to 50 g of an aqueous solution 3 (aqueous solution of 0.5 mass% lithium polystyrenesulfonate).

[Example 4]

A powdery, negative electrode active material D for nonaqueous secondary batteries was prepared in the same manner as in Example 1, except that the aqueous solution 1 of organic compound was changed to 50 g of an aqueous solution 4 (aqueous solution of 0.75 mass% lithium polystyrenesulfonate).

[Example 5]

A powdery, negative electrode active material E for nonaqueous secondary batteries was prepared in the same manner as in Example 1, except that the aqueous solution 1 of organic compound was changed to 50 g of an aqueous solution 5 (aqueous solution of 1.0 mass% lithium polystyrenesulfonate).

[Example 6]

A powdery, negative electrode active material F for nonaqueous secondary batteries was prepared in the same manner as in Example 1, except that the aqueous solution 1 of organic compound was changed to 50 g of an aqueous solution 6 (aqueous solution of 3.0 mass% lithium polystyrenesulfonate).

[Example 7]

A powdery, negative electrode active material G for nonaqueous secondary batteries was prepared in the same manner as in Example 1, except that the aqueous solution 1 of organic compound was changed to 50 g of an aqueous solution 7 (aqueous solution of 0.5 mass% sodium polystyrenesulfonate, Tosoh Organic Chemical's (PS-5)).

[Example 8]

A powdery, negative electrode active material H for nonaqueous secondary batteries was prepared in the same manner as in Example 1, except that the aqueous solution 1 of organic compound was changed to 50 g of an aqueous solution 8 (aqueous solution of 0.5 mass% Tosoh Organic Chemical's styrene-sodium styrenesulfonate copolymer, having a compositional ratio of styrene/sodium styrenesulfonate = 35/65 (by mol) and having a weight-average molecular weight of 74000).

[Example 9]

A powdery, negative electrode active material I for nonaqueous secondary batteries was prepared in the same manner as in Example 1, except that the aqueous solution 1 of organic compound was changed to 50 g of an aqueous solution 9 (aqueous solution of 0.5 mass% Tosoh Organic Chemical's styrene-sodium styrenesulfonate copolymer, having a compositional ratio of styrene/sodium styrenesulfonate = 50/50 (by mol) and having a weight-average molecular weight of 24000).

[Example 10]

In preparing an active material slurry, the active material was not coated with an organic compound and was not dried. 20 g of spheronized natural graphite, 20 g of an aqueous solution of carboxymethyl cellulose (1 mass%), 0.333 g of an aqueous solution 10 of an organic compound (aqueous solution of 30 mass% Aldrich's lithium polystyrenesulfonate (weight-average molecular weight: 75000)) were mixed, kneaded with a kneading machine (Awatori Neritaro, by Thinky) at 2000 rpm for 5 minutes, and then defoamed at 2200 rpm for 1 minute, and 0.5 g of an aqueous dispersion of styrene-butadiene rubber (40 mass%) was added thereto and again kneaded under the same condition as above to prepare a negative electrode active material J for nonaqueous secondary batteries.

[Example 11]

50 g of spheronized natural graphite and 50 g of an aqueous solution 11 of an organic compound (aqueous solution of 0.5 mass% sodium polystyrene sulfonate, Tosoh Organic Chemical's (PS-5)) were mixed in a flask for 1 hour, and then filtered under suction through a paper filter having an opening of 1 $\mu$m and using a Kiriyama funnel to remove the solvent. Subsequently, 25 g of distilled water was poured onto the filtration residue to wash the residue. The washed residue was dried at 150°C for 7 hours to prepare a negative electrode active material K for nonaqueous secondary batteries.

[Example 12]

A powdery, negative electrode active material L for nonaqueous secondary batteries was prepared in the same manner as in Example 1, except that the aqueous solution 1 of organic compound was changed to 50 g of an aqueous solution 12 (aqueous solution of 0.5 mass% low-conductive polyanilinesulfonic acid).

[Example 13]

A powdery, negative electrode active material M for nonaqueous secondary batteries was prepared in the same manner as in Example 3, except that amorphous substance-coated graphite was used as the active material (A). The amorphous substance-coated graphite was prepared according to the following method.
An amorphous carbon precursor, heavy oil was mixed with spheronized natural graphite (mean particle size (d50) 17 $\mu$m) in a ratio of 21% by mass, using a mixer. The obtained mixture was put into a container, and fired in an inert atmosphere at 1300°C so that the heavy oil was amorphized. The obtained carbon material was roughly ground and finely ground to prepare amorphous substance-coated graphite.

[Example 14]

A powdery, negative electrode active material N for nonaqueous secondary batteries was prepared in the same manner as in Example 3, except that graphite composite particles were used as the active material (A). The graphite composite particles were prepared according to the following method.
A binder pitch was added to graphite particles having a mean particle size d50 of 16.6 $\mu$m in a ratio of 30% by mass, put into a kneader and mixed therein for 20 minutes. Using a molding machine, the mixture was molded, heated in an inert atmosphere in an electric furnace from room temperature up to 1000°C, and kept at 1000°C for VM-removal firing. Subsequently, the fired product was heated at 3000°C to perform graphitization. The obtained carbon material was roughly ground and finely ground to prepare graphite composite particles.

[Comparative Example 1]

Graphite not containing an organic compound but composed of the active material (A), spheronized natural graphite (mean particle size (d50) = 17 $\mu$m, BET method specific surface area (SA) = 6.7 m$^2$/g, tap density = 1.02 g/cm$^3$) alone was used here as a negative electrode active material Z for nonaqueous secondary batteries. The spheronized natural graphite is the same one as that used in Example 1. The negative electrode active material Z for nonaqueous secondary batteries is expressed simply as "spheronized natural graphite" in Table 1.

[Comparative Example 2]

A negative electrode active material O for nonaqueous secondary batteries was prepared in the same manner as in Example 1, except that the solution 1 of organic compound was changed to 50 g of an aqueous solution 13 (aqueous solution prepared by adding 5.1 g of Wako's polyacrylic acid (weight-average molecular weight 5000) to 50 g of water, stirring it, adding thereto 80 g of an aqueous solution of 5 mass% lithium hydroxide monohydrate to prepare an aqueous solution (pH = 10 or so), weighing and collecting 6.6667 g of the resulting solution, and then adding 43.3333 g of distilled water thereto).

[Comparative Example 3]

A negative electrode active material P for nonaqueous secondary batteries was prepared in the same manner as in Example 1, except that the solution 1 of organic compound was changed to 50 g of an aqueous solution 14 (aqueous solution prepared by adding 0.64 g of an aqueous solution of 1 mol/L hydrochloric acid to 10.0 g of an aqueous solution of 25 mass% Aldrich's sodium polyvinylsulfonate, then adding 2.3 g of an aqueous solution of 1 mass% lithium hydroxide thereto and stirring it (pH = 9), weighing and collecting 1.2953 g of the resulting solution, and then adding 48.7047 g of distilled water thereto).

[Comparative Example 4]

A negative electrode active material Q for nonaqueous secondary batteries was prepared in the same manner as in Example 1, except that the solution 1 of organic compound was changed to 50 g of an aqueous solution 15 (aqueous solution prepared by adding 49.000 g of distilled water to 1.000 g of an aqueous solution of 25 mass% Aldrich's sodium polyvinylsulfonate).

[Comparative Example 5]

A negative electrode active material R for nonaqueous secondary batteries was prepared in the same manner as in Example 1, except that the solution 1 of organic compound was changed to 12.5 g of an aqueous solution 16 (4% EVOH aqueous solution prepared by dissolving 1.000 g of NIPPON GOHSEI's ethylene-vinyl alcohol (EV) copolymer Soarnol (item code: D2908) in 24.000 g of ethanol/water mixed solvent (50 mass%/50 mass%).

[Comparative Example 6]

A negative electrode active material S for nonaqueous secondary batteries was prepared in the same manner as in Example 1, except that the solution 1 of organic compound was changed to 50 g of an aqueous solution 17 (aqueous solution of 0.5 mass% high-conductive polyanilinesulfonic acid).

Using the negative electrode active materials A to S and Z prepared as above and in the same manner as in Example 1, various slurries were prepared, coin cells produced were evaluated for the charge/discharge performance, and laminate cells were analyzed for measurement of the initial gas amount and of measurement of conserved gas amount. The results and the electric conductivity of the organic compounds at 25°C are collectively shown in Table 2 below.

[Table 2]

Table 2

| | Negative Electrode Active Material for Nonaqueous Secondary Batteries | Organic Compound | Electric Conductivity (S/cm) of Organic Compound | Organic Compound (mass% relative to negative electrode active material) | Initial Charge/ Discharge Efficiency (%) | Capacity Loss (mAh/g) | Initial Gas (mL/ cell) | Conserved Gas (mL/ cell) |
|---|---|---|---|---|---|---|---|---|
| Example 1 | A | lithium polystyrenesulfonate | 0.0001> | 0.1 | 92.1 | 31.5 | - | - |
| Example 2 | B | lithium polystyrenesulfonate | 0.0001> | 0.2 | 92.7 | 28.5 | 0.044 | 0.086 |
| Example 3 | C | lithium polystyrenesulfonate | 0.0001> | 0.5 | 92.5 | 29.2 | 0.032 | 0.077 |
| Example 4 | D | lithium polystyrenesulfonate | 0.0001> | 0.75 | 93.4 | 25.4 | 0.022 | 0.078 |
| Example 5 | E | lithium polystyrenesulfonate | 0.0001> | 1 | 92.8 | 27.5 | 0.015 | 0.063 |
| Example 6 | F | lithium polystyrenesulfonate | 0.0001> | 3 | 92.9 | 27.0 | 0.003 | 0.039 |
| Example 7 | G | sodium polystyrenesulfonate | 0.0001> | 0.5 | 92.8 | 28.3 | 0.024 | 0.085 |
| Example 8 | H | polystyrene-sodium styrenesulfonate (35/65) | 0.0001> | 0.5 | 93.2 | 26.3 | 0.028 | 0.089 |
| Example 9 | I | polystyrene-sodium styrenesulfonate (50/50) | 0.0001> | 0.5 | 92.0 | 30.7 | - | - |
| Example 10 | J | lithium polystyrenesulfonate (added during slurry preparation) | 0.0001 > | 0.5 | 92.8 | 28.4 | 0.030 | 0.080 |
| Example 11 | K | lithium polystyrenesulfonate (adsorbed and coated) | 0.0001> | 0.13 | 92.6 | 29.3 | 0.043 | 0.084 |

(continued)

| | Negative Electrode Active Material for Nonaqueous Secondary Batteries | Organic Compound | Electric Conductivity (S/cm) of Organic Compound | Organic Compound (mass% relative to negative electrode active material) | Initial Charge/ Discharge Efficiency (%) | Capacity Loss (mAh/g) | Initial Gas (mL/ cell) | Conserved Gas (mL/ cell) |
|---|---|---|---|---|---|---|---|---|
| Example 12 | L | low-conductive polyanilinesulfonic acid | 0.01 | 0.5 | 91.7 | 32.8 | - | - |
| Example 13 | M | lithium polystyrenesulfonate | 0.0001> | 0.5 | - | 25.4 | - | - |
| Example 14 | N | lithium polystyrenesulfonate | 0.0001> | 0.5 | - | 22.2 | - | - |
| Comparative Example 1 | spheronized natural graphite | - | - | - | 90.7 | 37.6 | 0.066 | 0.089 |
| Comparative Example 2 | O | lithium polyacrylate | 0.0001> | 0.5 | 91.6 | 33.8 | 0.055 | 0.096 |
| Comparative Example 3 | P | lithium polyvinylsulfonate | 0.0001> | 0.5 | 92.1 | 31.4 | 0.059 | 0.092 |
| Comparative Example 4 | Q | sodium polyvinylsulfonate | 0.0001> | 0.5 | 91.9 | 32.3 | 0.062 | 0.096 |
| Comparative Example 5 | R | EVOH | 0.0001> | 1 | 91.4 | 34.5 | - | - |
| Comparative Example 6 | S | high-conductive polyanilinesulfonic acid | 20 | 0.5 | 91.25 | 35.0 | - | - |
| *Organic Compound (mass% relative to negative electrode active material)" means the content (mass%) of the organic compound relative to the active material (A). | | | | | | | | |

**EP 2 816 642 B1**

[Example 15]

The active material C was tested for the total amount of the initial gas amount and the conserved gas amount in the same manner as in Example 3, except that the condition for the measurement of the conserved gas amount in the laminate cell was changed to at 70°C and for 3 days.

[Example 16]

The total amount of the initial gas amount and the conserved gas amount was measured in the same manner as in Example 3, except that 1,6-diisocyanatohexane was added to the electrolytic solution in an amount of 1% (by mass) of the entire electrolytic solution.

[Comparative Example 7]

The active material Z was tested for the total amount of the initial gas amount and the conserved gas amount in the same manner as in Comparative Example 1, except that the condition for the measurement of the conserved gas amount in the laminate cell was changed to at 70°C and for 3 days.

[Comparative Example 8]

The total amount of the initial gas amount and the conserved gas amount was measured in the same manner as in Comparative Example 7, except that 1,6-diisocyanatohexane was added to the electrolytic solution in an amount of 1% (by mass) of the entire electrolytic solution.

From the above measurement, the total of the initial gas amount and the conserved gas amount was calculated, and the results are shown in Table 3 below.

[Table 3]

Table 3

| | Active Material | Organic Compound | Organic Compound (mass% relative to negative electrode active material) | Electrolytic Solution | Auxiliary Agent | Gas (initial + conserved) (mL/cell) |
|---|---|---|---|---|---|---|
| Example 15 | C | lithium polystyrenesulfonate | 0.5 | EC/DMC/EMC = 3/3/4 (by volume) containing 1.0 M LiPF$_6$ | - | 0.18 |
| Example 16 | C | lithium polystyrenesulfonate | 0.5 | EC/DMC/EMC = 3/3/4 (by volume) containing 1.0 M LiPF$_6$ | 1,6-diisocyanatohexane | 0.05 |
| Comparative Example 7 | spheronized natural graphite | - | - | EC/DMC/EMC = 3/3/4 (by volume) containing 1.0 M LiPF$_6$ | - | 0.32 |
| Comparative Example 8 | spheronized natural graphite | - | - | EC/DMC/EMC = 3/3/4 (by volume) containing 1.0 M LiPF$_6$ | 1,6-diisocyanatohexane | 0.09 |
| Storage Condition: 70°C, 3 days. | | | | | | |

It is known that, as compared with the negative electrode active materials for nonaqueous secondary batteries of Comparative Examples 1 to 6, the negative electrode active materials for nonaqueous secondary batteries containing the active material (A) and the organic compound (B) (Examples 1 to 12) were improved in the initial charge/discharge efficiency (%) and, in Examples 1 to 14, the capacity loss reduced. In addition, it is known that, as compared with that from the negative electrode active materials for nonaqueous secondary batteries of Comparative Examples 5 and 8, the long-term gas generation from those of Examples 15 and 16 reduced.

From these, it is known that, owing to the effect of the organic compound (B), the surface of the active material was coated to prevent the reductive decomposition of electrolytic solution, and therefore the capacity loss was reduced and the gas generation was prevented.

The present application is based on a Japanese patent application filed on February 14, 2012 (Application No. 2012-029988), a Japanese patent application filed on March 30, 2012 (Application No. 2012-080655), a Japanese patent application filed on May 16, 2012 (Application No. 2012-112317), a Japanese patent application filed on June 22, 2012 (Application No. 2012-141100), a Japanese patent application filed on July 27, 2012 (Application No. 2012-167659), a Japanese patent application filed on August 22, 2012 (Application No. 2012-183037), a Japanese patent application filed on December 18, 2012 (Application No. 2012-275819), a Japanese patent application filed on December 18, 2012 (Application No. 2012-275820), a Japanese patent application filed on January 16, 2013 (Application No. 2013-005457), and a Japanese patent application filed on January 29, 2013 (Application No. 2013-014416).

Industrial Applicability

The present inventors have found that the negative electrode active material for nonaqueous secondary batteries of the present invention can be used as the negative electrode active material in nonaqueous secondary batteries, and there can be obtained a well-balanced negative electrode material for nonaqueous secondary batteries which, while preventing gas generation, can further improve the charge/discharge efficiency of batteries and can reduce the capacity loss accompanied by charge/discharge cycles.

Accordingly, the negative electrode active material for nonaqueous secondary batteries of the present invention is useful for nonaqueous secondary batteries for use where the input/output characteristics are considered to be important, such as those for in-car products, power tools or the like, and is, in addition, also useful for nonaqueous secondary batteries for use for mobile appliances where the capacity is considered to be important, such as those for mobile telephones and personal computers.

**Claims**

1.  A negative electrode active material for nonaqueous secondary batteries, which comprises an active material (A) capable of occluding and releasing lithium ions and an organic compound (B), **characterized in that**
    the active material (A) is a spherical graphite, wherein optionally at least a part of the surface thereof is coated with a carbonaceous substance,
    the organic compound (B) is hardly soluble in a nonaqueous electrolytic solution, has a $\pi$-conjugated structure, and has an electric conductivity at 25°C of 0.1 S/cm or less, the organic compound (B) being hardly soluble in a nonaqueous electrolytic solution when the dry weight reduction after having immersed the compound in a solvent prepared by mixing ethyl carbonate and ethylmethyl carbonate in a ratio by volume of 3/7 for 24 hours is 10% by mass or less,
    the content of the organic compound (B) is 0.01% by mass or more and 10% by mass or less relative to the active material (A), and
    the active material (A) is coated with the organic compound (B).

2.  The negative electrode active material for nonaqueous secondary batteries according to claim 1, wherein the organic compound (B) has an ionic group and an aromatic ring.

3.  The negative electrode active material for nonaqueous secondary batteries according to claim 1 or 2, wherein the weight-average molecular weight of the organic compound (B) is 500 or more and 1,000,000 or less.

4.  The negative electrode active material for nonaqueous secondary batteries according to claim 1, wherein the organic compound (B) is at least one compound selected from a group consisting of polystyrenesulfonic acid, lithium polystyrenesulfonate, sodium polystyrenesulfonate, styrene-styrenesulfonic acid copolymer, styrene-lithium styrenesulfonate copolymer, styrene-sodium styrenesulfonate copolymer, polyanilinesulfonic acid, polyvinylbenzoic acid, lithium polyvinylbenzoate, sodium polyvinylbenzoate, styrene-vinylbenzoic acid copolymer, styrene-lithium vinylbenzoate copolymer, styrene-sodium vinylbenzoate copolymer, lithium naphthalenesulfonate and sodium naphthalenesulfonate.

5. A negative electrode for nonaqueous secondary batteries, which is formed using the negative electrode active material for nonaqueous secondary batteries as described in any one of claims 1 to 4.

6. A nonaqueous secondary battery having a positive electrode and a negative electrode capable of occluding/releasing lithium ions, and an electrolyte, wherein the negative electrode is the negative electrode for nonaqueous secondary batteries as described in claim 5.

**Patentansprüche**

1. Aktivmaterial für eine negative Elektrode für nicht-wässrige Sekundärbatterien, das ein Aktivmaterial (A), das geeignet ist Lithiumionen zu okkludieren und freizusetzen, und eine organische Verbindung (B) umfasst, **dadurch gekennzeichnet, dass**
   das Aktivmaterial (A) ein kugelförmiges Graphit ist, wobei gegebenenfalls mindestens ein Teil der Oberfläche davon mit einer kohlenstoffhaltigen Substanz beschichtet ist,
   die organische Verbindung (B) kaum in einer nicht-wässrigen elektrolytischen Lösung löslich ist, eine $\pi$-konjugierte Struktur aufweist und eine elektrische Leitfähigkeit bei 25°C von 0,1 S/cm oder weniger aufweist, wobei die organische Verbindung (B) kaum in einer nicht-wässrigen elektrolytischen Lösung löslich ist, wenn die Trockengewichtsverringerung, nach dem die Verbindung in ein Lösungsmittel, das durch Mischen von Ethylcarbonat und Ethylmethylcarbonat in einem Volumenverhältnis von 3/7 hergestellt wurde, für 24 Stunden eingetaucht wurde, 10 Masse-% oder weniger beträgt,
   der Gehalt der organischen Verbindung (B) 0,01 Masse-% oder mehr und 10 Masse-% oder weniger, relativ zu dem Aktivmaterial (A), beträgt und
   das Aktivmaterial (A) mit der organischen Verbindung (B) beschichtet ist.

2. Aktivmaterial für eine negative Elektrode für nicht-wässrige Sekundärbatterien gemäß Anspruch 1, wobei die organische Verbindung (B) eine ionische Gruppe und einen aromatischen Ring aufweist.

3. Aktivmaterial für eine negative Elektrode für nicht-wässrige Sekundärbatterien gemäß Anspruch 1 oder 2, wobei das gewichtsgemittelte Molekulargewicht der organischen Verbindung (B) 500 oder mehr und 1.000.000 oder weniger beträgt.

4. Aktivmaterial für eine negative Elektrode für nicht-wässrige Sekundärbatterien gemäß Anspruch 1, wobei die organische Verbindung (B) mindestens eine Verbindung, ausgewählt aus der Gruppe, bestehend aus Polystyrolsulfonsäure, Lithiumpolystyrolsulfonat, Natriumpolystyrolsulfonat, Styrol-Styrolsulfonsäure-Copolymer, Styrol-Lithiumstyrolsulfonat-Copolymer, Styrol-Natriumstyrolsulfonat-Copolymer, Polyanilinsulfonsäure, Polyvinylbenzoesäure, Lithiumpolyvinylbenzoat, Natriumpolyvinylbenzoat, Styrol-Vinylbenzoesäure-Copolymer, Styrol-Lithiumvinylbenzoat-Copolymer, Styrol-Natriumvinylbenzoat-Copolymer, Lithiumnaphthalinsulfonat und Natriumnaphthalinsulfonat, ist.

5. Negative Elektrode für nicht-wässrige Sekundärbatterien, die unter Verwendung des Aktivmaterials für eine negative Elektrode für nicht-wässrige Sekundärbatterien wie in irgendeinem der Ansprüche 1 bis 4 beschrieben gebildet ist.

6. Nicht-wässrige Sekundärbatterie, die eine positive Elektrode und eine negative Elektrode, geeignet zum Okkludieren/Freisetzen von Lithiumionen, und einen Elektrolyt aufweist, wobei die negative Elektrode die negative Elektrode für nicht-wässrige Sekundärbatterien wie in Anspruch 5 beschrieben ist.

**Revendications**

1. Matériau actif d'électrode négative pour des batteries secondaires non aqueuses, qui comprend un matériau actif (A) capable de bloquer et de libérer des ions de lithium et un composé organique (B), **caractérisé en ce que**
   le matériau actif (A) est un graphite sphérique, dans lequel facultativement au moins une partie de la surface de celui-ci est revêtue d'une substance carbonée,
   le composé organique (B) est difficilement soluble dans une solution électrolytique non aqueuse, possède une structure conjuguée $\pi$, et possède une conductivité électrique à 25 °C de 0,1 S/cm ou moins, le composé organique (B) étant difficilement soluble dans une solution électrolytique non aqueuse lorsque la réduction du poids sec après avoir immergé le composé dans un solvant préparé en mélangeant du carbonate d'éthyle et du carbonate d'éthylméthyle selon un rapport de volume de 3/7 pendant 24 heures est de 10 % en masse ou moins,

le contenu du composé organique (B) est de 0,01 % en masse ou plus et de 10 % en masse ou moins par rapport au matériau actif (A), et

le matériau actif (A) est revêtu du composé organique (B).

2. Matériau actif d'électrode négative pour des batteries secondaires non aqueuses selon la revendication 1, dans lequel le composé organique (B) possède un groupe ionique et un cycle aromatique.

3. Matériau actif d'électrode négative pour des batteries secondaires non aqueuses selon la revendication 1 ou 2, dans lequel le poids moléculaire moyen en poids du composé organique (B) est de 500 ou plus et de 1 000 000 ou moins.

4. Matériau actif d'électrode négative pour des batteries secondaires non aqueuses selon la revendication 1, dans lequel le composé organique (B) est au moins un composé sélectionné à partir d'un groupe constitué par un acide polystyrènesulfonique, un polystyrènesulfonate de lithium, un polystyrènesulfonate de sodium, un copolymère d'acide styrène-styrènesulfonique, un copolymère de styrènesulfonate de styrène-lithium, un copolymère de styrènesulfonate de styrène-sodium, un acide polyanilinesulfonique, un acide polyvinylbenzoïque, un polyvinylbenzoate de lithium, un polyvinylbenzoate de sodium, un copolymère d'acide styrène-vinylbenzoïque, un copolymère de vinylbenzoate de styrène-lithium, un copolymère de vinylbenzoate de styrène-sodium, un naphtalènesulfonate de lithium et un naphtalènesulfonate de sodium.

5. Électrode négative pour des batteries secondaires non aqueuses, qui est formée en utilisant le matériau actif d'électrode négative pour des batteries secondaires non aqueuses tel que décrit dans l'une quelconque des revendications 1 à 4.

6. Batterie secondaire non aqueuse ayant une électrode négative et une électrode positive capables de bloquer/libérer des ions de lithium, et un électrolyte, dans laquelle l'électrode négative est l'électrode négative pour batteries secondaires non aqueuses telle que définie dans la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11120992 A
- JP 002117851 A
- JP 2007095494 A
- JP 002134171 A
- WO 2008097723 A1
- EP 1906472 A1
- JP 2005276604 A
- JP 2008066260 A
- CN 1412873 A
- JP 2012029988 A
- JP 2012080655 A
- JP 2012112317 A
- JP 2012141100 A
- JP 2012167659 A
- JP 2012183037 A
- JP 2012275819 A
- JP 2012275820 A
- JP 2013005457 A
- JP 2013014416 A